(19) Europäisches Patentamt / European Patent Office / Office européen des brevets

(11) **EP 4 489 292 A1**

(12) **EUROPEAN PATENT APPLICATION**

(43) Date of publication:
08.01.2025 Bulletin 2025/02

(21) Application number: 24172896.3

(22) Date of filing: 29.04.2024

(51) International Patent Classification (IPC):
*H02P 9/10* (2006.01)       *H02J 7/14* (2006.01)
*H02M 7/5387* (2007.01)     *H02M 7/797* (2006.01)

(52) Cooperative Patent Classification (CPC):
H02P 9/107; H02J 7/1492; H02M 7/53875;
H02M 7/797

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.07.2023 TW 112125576

(71) Applicant: APh ePower Co., Ltd.
Kaohsiung City 821 (TW)

(72) Inventors:
• CHEN, Jyh-Wei
821 Kaohsiung City (TW)
• SU, Hsiu-Hsien
821 Kaohsiung City (TW)
• TZENG, Yun-Chi
821 Kaohsiung City (TW)

(74) Representative: Becker, Eberhard
Becker Kurig & Partner
Patentanwälte mbB
Bavariastraße 7
80336 München (DE)

(54) **MOTOR DRIVING DEVICE**

(57) A motor driving device (100) includes a battery module (110) and a conversion circuit (120). The conversion circuit (120) drives a motor (MTR) in a driving mode, charges the battery module (110) in a charging mode, and includes a determination circuit (121), a controller (122), and a first phase upper arm switch circuit including a power switch (T1) and a transistor (M1). First terminals, second terminal, and control terminals of the power switch (T1) and the transistor (M1) are respectively coupled to a positive power supply terminal (TP) of the battery module (110), a first phase node (NDU), and the controller (122). In the charging mode, when a first phase voltage value (VU) located at the first phase node (NDU) is greater than a battery voltage value (VP) located at the positive power supply terminal (TP), the determination circuit (121) notifies the controller (122) to turn on the transistor (M1).

FIG. 2

EP 4 489 292 A1

**Description**

**BACKGROUND**

Technical Field

The disclosure relates to a driving device, and in particular, relates to a motor driving device for driving a motor.

Description of Related Art

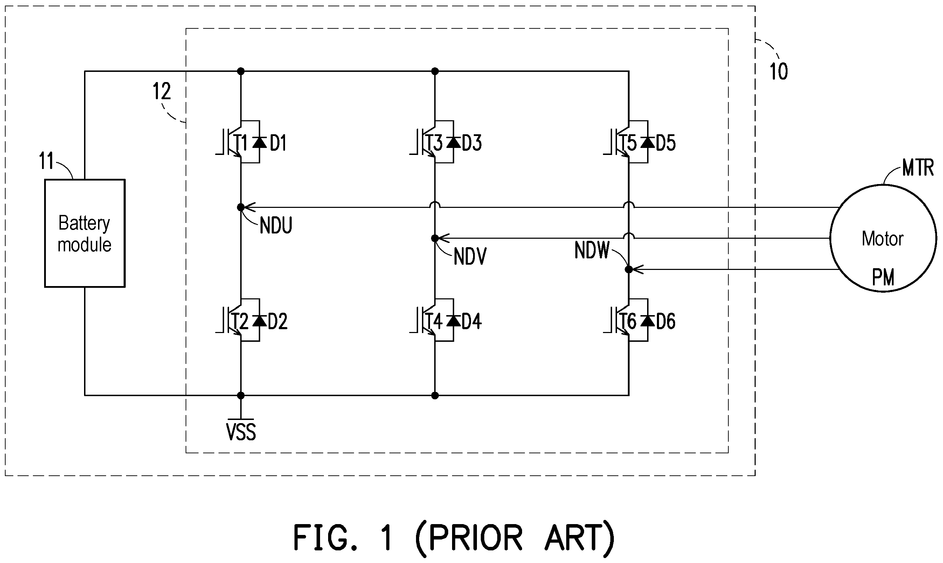

FIG. 1 is a schematic diagram of a motor driving device of the prior art. A motor driving device 10 includes a battery module 11 and a conversion circuit 12. The conversion circuit 12 uses the electric power stored in the battery module 11 to drive a motor MTR. The conversion circuit 12 may also use the electric power generated by the motor MTR to charge the battery module 11. The conversion circuit 12 includes upper arm power switches T1, T3, and T5, lower arm power switches T2, T4, and T6, and diodes D1 to D6.

When the battery module 11 is charged, the upper arm power switches T1, T3, and T5 and the lower arm power switches T2, T4, and T6 of the conversion circuit 12 are all turned off. The diodes D1 to D6 are used for a full-wave rectification operation of the electric power generated by the motor MTR. Taking the upper arm power switch T1 as an example, the upper arm power switch T1 is coupled between a first phase node NDU and a positive power supply terminal of the battery module 11. When the battery module 11 is charged, the upper arm power switch T1 is turned off. When a voltage difference of a first phase voltage value VU at the first phase node NDU minus a battery voltage value VP is greater than a forward bias value of the diode D1, the diode D1 is turned on. Therefore, the conversion circuit 12 uses the first phase voltage value VU to charge the battery module 11. Taking the lower arm power switch T2 as an example, the lower arm power switch T2 is coupled between the first phase node NDU and a negative power supply terminal of the battery module 11. When a voltage difference value between a reference low voltage value VP minus the first phase voltage value VU is less than a forward bias value of the diode D2, the detection diode D2 is turned on.

It should be noted that when the battery module 11 is charged, the conversion circuit 12 generates a voltage drop loss during the full-wave rectification operation of the electric power generated by the motor MTR. The voltage drop loss is caused by the forward bias value of the diodes D1 to D6. For instance, the forward bias voltage value of the diodes D1 to D6 is 0.7 volts to 1 volt. The voltage drop loss per phase of the full-wave rectification operation is 1.4 volts to 2 volts. The voltage drop loss of the conversion circuit 12 may lower the charging efficiency of the battery module 11. It follows that the voltage drop loss has to be lowered.

**SUMMARY**

The disclosure provides a motor driving device for driving a motor. The motor driving device provides low voltage drop losses.

A motor driving device provided by the disclosure is used to drive a motor. The motor driving device includes a battery module and a conversion circuit. The battery module stores battery power. The conversion circuit is coupled to the motor and the battery module. The conversion circuit drives the motor by using the battery power in a driving mode and charges the battery module by using motor power generated by the motor in a charging mode. The conversion circuit includes a determination circuit, a controller, and a first phase upper arm switch circuit. The first phase upper arm switch circuit includes a first power switch and a first transistor. A first terminal of the first power switch is coupled to a positive power supply terminal of the battery module. A second terminal of the first power switch is coupled to a first phase node. A control terminal of the first power switch is coupled to the controller. A first terminal of the first transistor is coupled to the positive power supply terminal. A second terminal of the first transistor is coupled to the first phase node. A control terminal of the first transistor is coupled to the controller. In the charging mode, the controller turns off the first power switch and the first transistor. In the charging mode, the determination circuit determines a first phase voltage value located at the first phase node. When the first phase voltage value is greater than a battery voltage value located at the positive power supply terminal, the determination circuit notifies the controller to turn on the first transistor.

To sum up, the first phase upper arm switch circuit includes the first power switch and the first transistor. The first terminal of the first transistor is coupled to the positive power supply terminal. The second terminal of the first transistor is coupled to the first phase node. In the charging mode, when the first phase voltage value is greater than the battery voltage value located at the positive power supply terminal, the first transistor is turned on. When the first transistor is turned on, the voltage difference value between the first terminal of the first transistor and the second terminal of the first transistor is significantly lower than the forward bias value of the diode in the first power switch. In this way, the voltage drop loss of the conversion circuit is reduced in the charging mode.

To make the aforementioned more comprehensible, several embodiments accompanied with drawings are described in detail as follows.

## BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 is a schematic diagram of a motor driving device of the prior art.

FIG. 2 is a schematic diagram illustrating a motor driving device according to an embodiment of the disclosure.

FIG. 3 is a schematic diagram illustrating an operation according to an embodiment of the disclosure.

FIG. 4 is a schematic diagram illustrating an operation according to an embodiment of the disclosure.

FIG. 5 is a schematic diagram illustrating a determination circuit according to an embodiment of the disclosure.

FIG. 6 is a circuit diagram illustrating a reference circuit according to an embodiment of the disclosure.

FIG. 7 is a circuit diagram illustrating a first phase voltage detection circuit according to an embodiment of the disclosure.

FIG. 8 is a circuit diagram illustrating a second phase voltage detection circuit according to an embodiment of the disclosure.

FIG. 9 is a circuit diagram illustrating a third phase voltage detection circuit according to an embodiment of the disclosure.

## DESCRIPTION OF THE EMBODIMENTS

Several embodiments of the disclosure are described in detail below accompanying with figures. In terms of the reference numerals used in the following descriptions, the same reference numerals in different figures should be considered as the same or the like elements. The embodiments are only a portion of the disclosure, which do not present all embodiments of the disclosure. More specifically, these embodiments are only examples in the scope of the patent application of the disclosure.

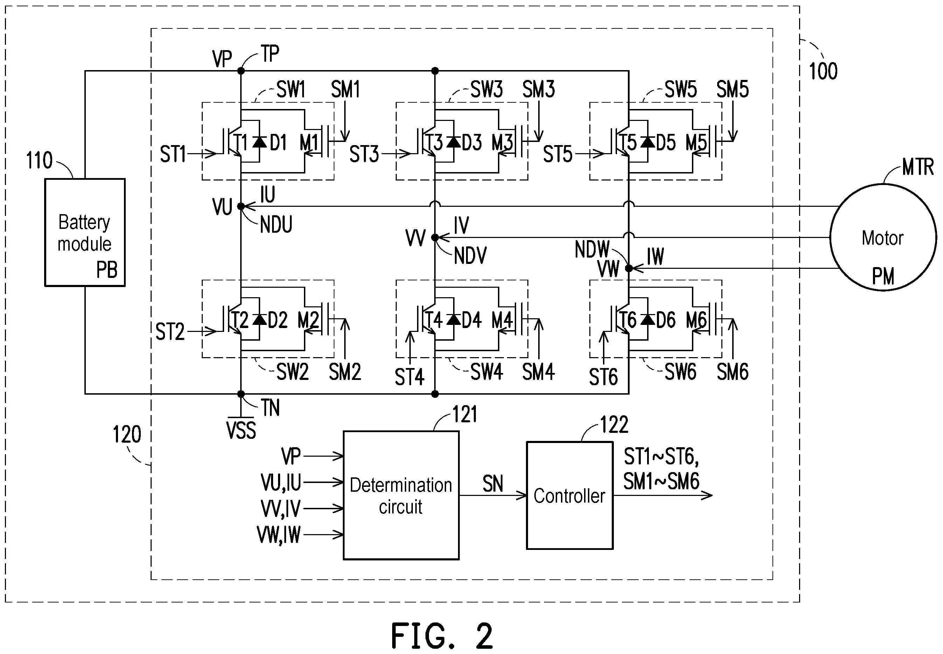

With reference to FIG. 2, FIG. 2 is a schematic diagram illustrating a motor driving device according to an embodiment of the disclosure. In this embodiment, a motor driving device 100 is used to drive a motor MTR. The motor driving device 100 includes a battery module 110 and a conversion circuit 120. The battery module 110 stores battery power PB. The conversion circuit 120 is coupled to the motor MTR and the battery module 110. The conversion circuit 120 uses the battery power PB of the battery module 110 to drive the motor MTR in a driving mode, thereby causing the motor MTR to run. The conversion circuit 120 uses motor power PM generated by the motor MTR to charge the battery module 110 in a charging mode. The motor MTR may be a braking device for a mobility vehicle. The mobility vehicle may be an electric walker, an electric bicycle, an electric car, or an elevator.

In this embodiment, the conversion circuit 120 includes a determination circuit 121, a controller 122, and switch circuits SW1 to SW6. The switch circuit SW1 may be a first phase upper arm switch circuit. The switch circuit SW2 may be a first phase lower arm switch circuit. The switch circuit SW3 may be a second phase upper arm switch circuit. The switch circuit SW4 may be a second phase lower arm switch circuit. The switch circuit SW5 may be a third phase upper arm switch circuit. The switch circuit SW6 may be a third phase lower arm switch circuit.

The switch circuit SW1 includes a power switch T1 and a transistor M1. A first terminal of the power switch T1 is coupled to a positive power supply terminal TP of the battery module 110. A second terminal of the power switch T1 is coupled to a first phase node NDU. A control terminal of the power switch T1 is coupled to the controller 122. A first terminal of the transistor M1 is coupled to the positive power supply terminal TP. A second terminal of the transistor M1 is coupled to the first phase node NDU. A control terminal of the transistor M1 is coupled to the controller 122. The controller 122 uses a control signal ST1 to control the power switch T1. The controller 122 uses a control signal SM1 to control the transistor M1.

In the charging mode, the controller 122 first turns off the power switch T1 and the transistor M1. Further, in the charging mode, the determination circuit 121 determines a first phase voltage value VU located at the first phase node NDU. When the first phase voltage value VU is greater than a battery voltage value VP located at the positive power supply terminal TP, the determination circuit 121 notifies the controller 122 to turn on the transistor M1.

Further, the switch circuit SW1 further includes a diode D1. The diode D1 is used to perform a rectification operation in the charging mode.

It is worth mentioning herein that in the charging mode, when the first phase voltage value VU is greater than the battery voltage value VP, the transistor M1 is turned on. When the transistor M1 is turned on, a voltage difference value between the first terminal of the transistor M1 and the second terminal of the transistor M1 is significantly lower than a forward bias value of the diode D1 in the switch circuit SW1. In this way, a voltage drop loss of the conversion circuit 120 may be reduced in the charging mode. Charging efficiency of the battery module 110 may be improved.

In this embodiment, the determination circuit 121 is coupled to the first phase node NDU and the positive power supply terminal TP, so as to receive the first phase voltage value VU and the battery voltage value VP in the charging mode. When both the power switch T1 and the transistor M1 are turned off, the determination circuit 121 compares the first phase voltage value VU and the battery voltage value VP. When the first phase voltage value VU is greater than the battery voltage value VP, the determination circuit 121 provides a notification signal SN. The controller 122 responds to the notification signal SN to turn on the transistor M1, so as to charge the battery module 110 by using the first phase voltage value VU. When both the power switch T1 and the transistor M1 are turned off, when the first phase voltage value VU is less than the battery voltage value VP, the transistor M1 continues to be turned off.

The switch circuit SW2 includes a power switch T2 and a transistor M2. A first terminal of the power switch T2 is coupled to the first phase node NDU. A second terminal of the power switch T2 is coupled to a negative power supply terminal TN of the battery module 110. A control terminal of the power switch T2 is coupled to the controller 122. A first terminal of the transistor M2 is coupled to the first phase node NDU. A second terminal of the transistor M2 is coupled to the negative power supply terminal TN. A control terminal of the transistor M2 is coupled to the controller 122. The controller 122 uses a control signal ST2 to control the power switch T2. The controller 122 uses a control signal SM2 to control the transistor M2.

In the charging mode, the controller 122 turns off the power switch T2 and the transistor M2. When the first phase voltage value VU is less than a reference low voltage value VSS, the determination circuit 121 notifies the controller 122 to turn on the transistor M2.

In this embodiment, the determination circuit 121 is further coupled to the negative power supply terminal TN, so as to receive the reference low voltage value VSS in the charging mode. When both the power switch T2 and the transistor M2 are turned off, the determination circuit 121 compares the first phase voltage value VU and the reference low voltage value VSS. When the first phase voltage value VU is less than the reference low voltage value VSS, the determination circuit 121 provides the notification signal SN. The controller 122 responds to the notification signal SN to turn on the transistor M2. On the other hand, when both the power switch T1 and the transistor M1 are turned off, when the first phase voltage value VU is greater than the reference low voltage value VSS, the transistor M2 continues to be turned off.

The switch circuit SW3 includes a power switch T3 and a transistor M3. A first terminal of the power switch T3 is coupled to the positive power supply terminal TP of the battery module 110. A second terminal of the power switch T3 is coupled to a second phase node NDV. A control terminal of the power switch T3 is coupled to the controller 122. A first terminal of the transistor M3 is coupled to the positive power supply terminal TP. A second terminal of the transistor M3 is coupled to the second phase node NDV. A control terminal of the transistor M3 is coupled to the controller 122. The controller 122 uses a control signal ST3 to control the power switch T3. The controller 122 uses a control signal SM3 to control the transistor M3. The switch circuit SW4 includes a power switch T4 and a transistor M4. A first terminal of the power switch T4 is coupled to the second phase node NDV. A second terminal of the power switch T4 is coupled to the negative power supply terminal TN of the battery module 110. A control terminal of the power switch T4 is coupled to the controller 122. A first terminal of the transistor M4 is coupled to the second phase node NDV. A second terminal of the transistor M4 is coupled to the negative power supply terminal TN. A control terminal of the transistor M4 is coupled to the controller 122. The controller 122 uses the control signal ST2 to control the power switch T4. The controller 122 uses a control signal SM4 to control the transistor M4.

In the charging mode, the controller 122 first turns off the power switches T3 and T4 and the transistors M3 and M4. The determination circuit 121 determines a second phase voltage value VV located at the second phase node NDV. When the second phase voltage value VV is greater than the battery voltage value VP, the determination circuit 121 notifies the controller 122 to turn on the transistor M3. When the second phase voltage value VV is less than the reference low voltage value VSS, the determination circuit 121 notifies the controller 122 to turn on the transistor M4.

The switch circuit SW4 includes a power switch T5 and a transistor M5. A first terminal of the power switch T5 is coupled to the positive power supply terminal TP of the battery module 110. A second terminal of the power switch T5 is coupled to a third phase node NDW. A control terminal of the power switch T5 is coupled to the controller 122. A first terminal of the transistor M5 is coupled to the positive power supply terminal TP. A second terminal of the transistor M5 is coupled to the third phase node NDW. A control terminal of the transistor M5 is coupled to the controller 122. The controller 122 uses a control signal ST5 to control the power switch T5. The controller 122 uses a control signal SM5 to control the transistor M5. The switch circuit SW6 includes a power switch T6 and a transistor M6. A first terminal of the power switch T6 is coupled to the third phase node NDW. A second terminal of the power switch T6 is coupled to the negative power supply terminal TN of the battery module 110. A control terminal of the power switch T6 is coupled to the controller 122. A first terminal of the transistor M6 is coupled to the third phase node NDW. A second terminal of the transistor M6 is coupled to the negative power supply terminal TN. A control terminal of the transistor M6 is coupled to the controller 122. The controller 122 uses the control signal ST2 to control the power switch T6. The controller 122 uses a control signal SM6 to control the transistor M6.

In the charging mode, the controller 122 first turns off the power switches T5 and T6 and the transistors M5 and M6, and the determination circuit 121 determines a third phase voltage value VW located at the third phase node NDW.

When the third phase voltage value VW is greater than the battery voltage value VP, the determination circuit 121 notifies the controller 122 to turn on the transistor M5. When the third phase voltage value VW is less than the reference low voltage value VSS, the determination circuit 121 notifies the controller 122 to turn on the transistor M6.

In this embodiment, the switch circuit SW2 further includes a diode D2. The switch circuit SW2 further includes a diode D3. It thus can be deduced that the switch circuit SW6 further includes a diode D6. The diodes D2 to D6 are used to perform the rectification operations in the charging mode.

Based on the above, in the charging mode, the determination circuit 121 detects the first phase voltage value VU, the second phase voltage value VV, and the third phase voltage value VW and thereby determines whether to turn on the transistors M1 to M6.

In this embodiment, each of the power switches T1 to T6 is implemented by, for example, an insulated gate bipolar transistor (IGBT). Each of the transistors M1 to M6 are, for example, a metal-oxide-semiconductor field-effect transistor (MOSFET). However, the implementation of the power switches T1 to T6 and the transistors M1 to M6 in this embodiment is not limited in the disclosure. The power switches T1 to T6 and the transistors M1 to M6 may be implemented by any suitable form of transistor components.

In the charging mode, the determination circuit 121 may further detect a first phase current IU flowing through the first phase node NDU, second phase current IV flowing through the second phase node NDV, and a third phase current IW flowing through the third phase node NDW, so as to determine whether to turn on the transistors M1 to M6.

The first phase current IU is taken as an example herein, and in the charging mode, the determination circuit 121 detects a direction of the first phase current IU. When the first phase current IU flows to the positive power supply terminal TP through the diode D1 of the first power switch T1, the determination circuit 121 notifies the controller 122 to turn on the transistor M1. When the first phase current IU flows to the first phase node NDU through the diode D2 of the second power switch T2, the determination circuit 121 notifies the controller 122 to turn on the transistor M2.

In this embodiment, the conversion circuit 120 may determine to turn on the transistors M3 to M6 through the abovementioned similar operations in the charging mode, so description thereof is not repeated herein.

In the charging mode, the determination circuit 121 may further detect the first phase current IU, the second phase current IV, and the third phase current IW, so as to decide whether to turn off the turned-on transistors among the transistors M1 to M6.

The first phase current IU is taken as an example herein, and in the charging mode, when the transistor M1 is turned on, the determination circuit 121 determines the first phase current IU. When the first phase current IU flows from the positive power supply terminal TP to the first phase node NDU, the determination circuit 121 determines that the first phase current IU flows back to the motor MTR. Therefore, in order to prevent the motor MTR or the transistor M1 from being burned, the determination circuit 121 notifies the controller 122 to turn off the transistor M1. When the transistor M2 is turned on, the determination circuit 121 determines the first phase current IU. When the first phase current IU flows from the first phase node NDU to the negative power supply terminal TN, the determination circuit 121 determines that the first phase current IU flows to the reference low voltage VSS. Therefore, in order to prevent the transistor M2 from being burned, the determination circuit 121 notifies the controller 122 to turn off the transistor M2.

In this embodiment, the conversion circuit 120 may determine to turn off the turned-on transistors among the transistors M3 to M6 through the abovementioned similar operations in the charging mode, so description thereof is not repeated herein.

In the charging mode, the determination circuit 121 may further detect the first phase voltage value VU, the second phase voltage value VV, and the third phase voltage value VW, so as to decide whether to turn off the turned-on transistors among the transistors M1 to M6.

The first phase voltage value VU is taken as an example herein, and in the charging mode, when the transistor M1 is turned on, the determination circuit 121 determines the first phase voltage value VU. When the first phase voltage value VU is substantially equal to the battery voltage value VP, the determination circuit 121 notifies the controller 122 to turn off the transistor M1 based on a first turning-on time length TL1. Therefore, the determination circuit 121 determines the first phase voltage value VU when the transistor M1 is turned off.

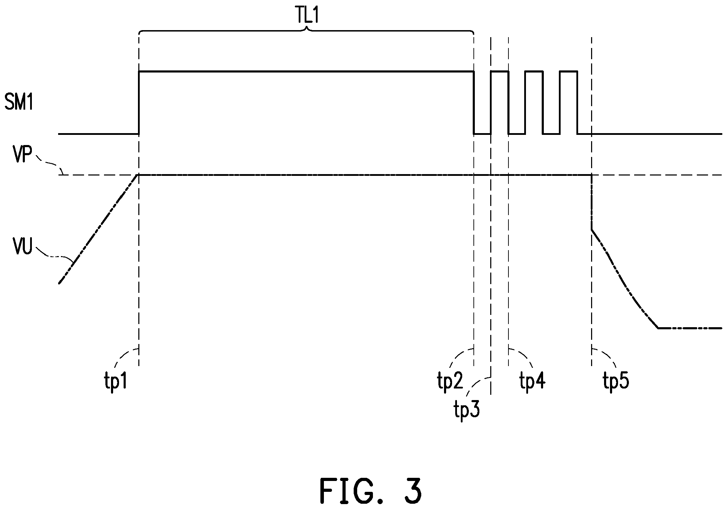

For instance, with reference to FIG. 2 and FIG. 3 together, FIG. 3 is a schematic diagram illustrating an operation according to an embodiment of the disclosure. FIG. 3 shows a sequence diagram of the control signal SM1, the battery voltage value VP, and the first phase voltage value VU in the charging mode. When the first phase voltage value VU is less than the battery voltage value VP, the control signal SM1 has a low voltage value. Therefore, the transistor M1 is turned off. At a time point tp1, when the first phase voltage value VU is greater than the battery voltage value VP, the control signal SM1 changes from a low voltage value to a high voltage value. Therefore, the transistor M1 is turned on. The first phase voltage value VU is substantially equal to the battery voltage value VP. After the first turning-on time length TL1, the control signal SM1 changes from a high voltage value to a low voltage value at a time point tp2. The transistor M1 is turned off. Therefore, the determination circuit 121 can compare the first phase voltage value VU and the battery voltage value VP when the transistor M1 is turned off. When the first phase voltage value VU is greater than the battery voltage value VP, the transistor M1 is turned on at a time point tp3. Next, at a time point tp4, the transistor M1 is turned off. The determination circuit 121 compares the first phase voltage value VU and the battery voltage value VP, and so on. In the case where the transistor M1 is turned off, when the first phase voltage value VU is less than the battery voltage value VP at a time point tp5, the transistor M1 is turned off. In this embodiment, the first turning-on time length TL1 may be set.

With reference to the embodiment of FIG. 2 again, in the charging mode, when the transistor M2 is turned on, the determination circuit 121 determines the first phase voltage value VU. When the first phase voltage value VU is substantially equal to the reference low voltage value VSS, the determination circuit 121 notifies the controller 122 to turn off the transistor M1 based on a second turning-on time length TL2. Therefore, the determination circuit 121 determines the first phase voltage value VU when the transistor M2 is turned off.

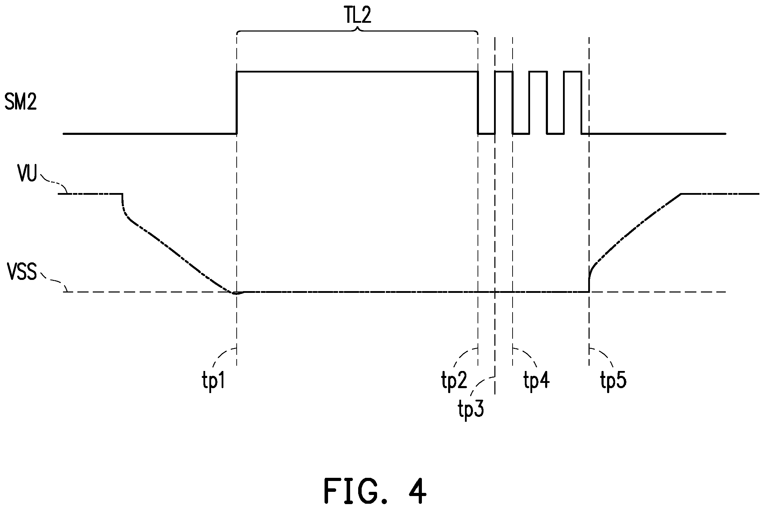

For instance, with reference to FIG. 2 and FIG. 4 together, FIG. 4 is a schematic diagram illustrating an operation according to an embodiment of the disclosure. FIG. 4 shows a sequence diagram of the control signal SM2, the reference low voltage value VSS, and the first phase voltage value VU in the charging mode. When the first phase voltage value VU is greater than the reference low voltage value VSS, the control signal SM1 has a low voltage value. Therefore, the transistor M2 is turned off. At the time point tp1, when the first phase voltage value VU is less than the reference low voltage value VSS, the control signal SM2 changes from a low voltage value to a high voltage value. Therefore, the transistor M2 is turned on. The first phase voltage value VU is substantially equal to the reference low voltage value VSS. After the second turning-on time length TL2, the control signal SM2 changes from a high voltage value to a low voltage value at the time point tp2. The transistor M2 is turned off. Therefore, the determination circuit 121 can compare the first phase voltage value VU and the reference low voltage value VSS when the transistor M2 is turned off. When the first phase voltage value VU is less than the battery voltage value VP, the transistor M2 is turned on at the time point tp3. Next, at the time point tp4, the transistor M2 is turned off. The determination circuit 121 compares the first phase voltage value VU and the reference low voltage value VSS, and so on. In the case where the transistor M2 is turned off, when the first phase voltage value VU is greater than the reference low voltage value VSS at the time point tp5, the transistor M2 is turned off. In this embodiment, the second turning-on time length TL2 may be set.

In this embodiment, the conversion circuit 120 may determine to turn off the turned-on transistors among the transistors M3 to M6 through the abovementioned similar operations in the charging mode, so description thereof is not repeated herein.

In this embodiment, the battery module 110 is implemented by an aluminum-ion battery. This aluminum-ion battery has a high charge-discharge rate (C-rate). Therefore, the battery module 110 may achieve the benefit of fast charging.

The implementation of the determination circuit 121 is described in the following paragraphs with an example.

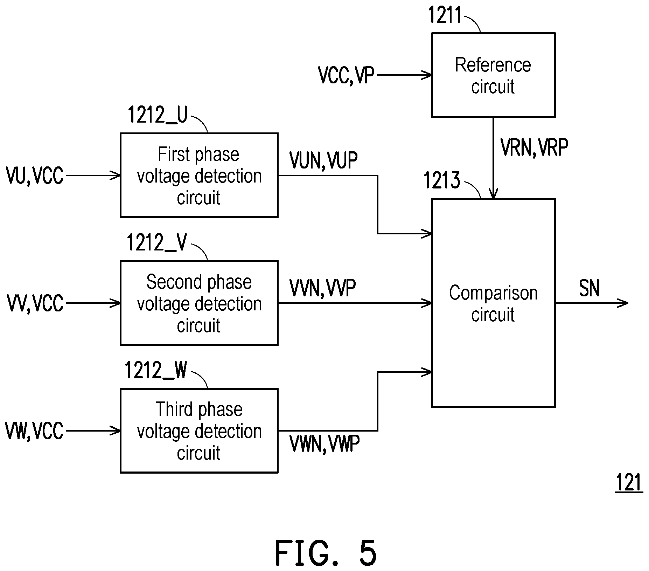

With reference to FIG. 2 and FIG. 5 together, FIG. 5 is a schematic diagram illustrating a determination circuit according to an embodiment of the disclosure. In this embodiment, the determination circuit 121 includes a reference circuit 1211, a first phase voltage detection circuit 1212_U, a second phase voltage detection circuit 1212_V, a third phase voltage detection circuit 1212_W, and a comparison circuit 1213.

In this embodiment, the reference circuit 1211 is coupled to the positive power supply terminal TP. The reference circuit 1211 receives a set voltage value VCC and the battery voltage value VP. The reference circuit 1211 converts the set voltage value VCC into a reference value VRN. Further, the reference circuit 1211 converts the battery voltage value VP into a reference value VRP.

In this embodiment, the first phase voltage detection circuit 1212_U is coupled to the first phase node NDU. The first phase voltage detection circuit 1212_U receives the first phase voltage value VU. The first phase voltage detection circuit 1212_U generates a detection value VUN according to the first phase voltage value VU and the reference low voltage value VSS. Further, the first phase voltage detection circuit 1212_U generates a detection value VUP according to the first phase voltage value VU and the set voltage value VCC.

In this embodiment, the comparison circuit 1213 is coupled to the first phase voltage detection circuit 1212_U and the reference circuit 1211. When the first phase voltage value VU is a negative voltage value, the comparison circuit 1213 notifies the controller 122 according to a first comparison result between the detection value VUN and the reference value VRN. Further, when the first phase voltage value VU is a positive voltage value, the controller 122 is notified according to a second comparison result between the detection value VUP and the reference value VRP. It should be noted that the first phase voltage value VU is an alternating current signal. The comparison circuit 1213 can provide one of the first comparison result and the second comparison result according to the first phase voltage value VU to provide a corresponding notification signal. The determination circuit 121 does not make an erroneous determination due to the positive or negative value of the first phase voltage value VU.

In this embodiment, the second phase voltage detection circuit 1212_V is coupled to the second phase node NDV. The second phase voltage detection circuit 1212_V receives the second phase voltage value VV. The second phase voltage detection circuit 1212_V generates a detection value VVN according to the second phase voltage value VV and the reference low voltage value VSS. Further, the second phase voltage detection circuit 1212_V generates a detection value VVP according to the second phase voltage value VV and the set voltage value VCC. In this embodiment, the comparison circuit 1213 is further coupled to the second phase voltage detection circuit 1212_V. When the second phase voltage value VV is a negative voltage value, the comparison circuit 1213 notifies the controller 122 according to a first comparison result between the detection value VVN and the reference value VRN. Further, when the second phase voltage value VV is a positive voltage value, the controller 122 is notified according to a second comparison result between the detection value VVP and the reference value VRP.

In this embodiment, the third phase voltage detection circuit 1212_W is coupled to the third phase node NDW. The third phase voltage detection circuit 1212_W receives the third phase voltage value VW. The third phase voltage detection circuit 1212_W generates a detection value VWN according to the third phase voltage value VW and the reference low voltage value VSS. Further, the third phase voltage detection circuit 1212_W generates a detection value VWP according to the third phase voltage value VW and the set voltage value VCC. In this embodiment, the comparison circuit 1213 is further coupled to the third phase voltage detection circuit 1212_W. When the third phase voltage value VW is a negative voltage value, the comparison circuit 1213 notifies the controller 122 according to a first comparison result between the detection value VWN and the reference value VRN. Further, when the third phase voltage value VW is a positive voltage value, the controller 122 is notified according to a second comparison result between the detection value VWP and the reference value VRN.

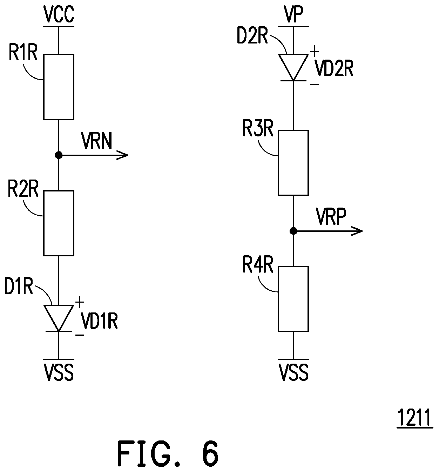

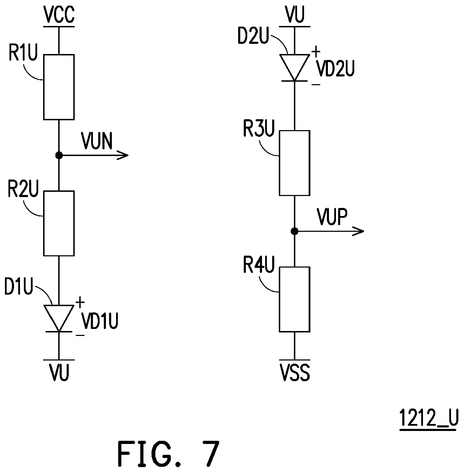

With reference to FIG. 2, FIG. 6, and FIG. 7 together, FIG. 6 is a circuit diagram illustrating a reference circuit according to an embodiment of the disclosure. FIG. 7 is a circuit diagram illustrating a first phase voltage detection circuit according to an embodiment of the disclosure. The reference circuit 1211 includes reference resistors R1R and R2R and a reference diode D1R. A first terminal of the reference resistor R1R receives the set voltage value VCC. A second terminal of the reference resistor R1R is used to output the reference value VRN. A first terminal of the reference resistor R2R is coupled to the second terminal of the reference resistor R1R. An anode of the reference diode D1R is coupled to a second terminal of the reference resistor R2R. A cathode of the reference diode D1R is coupled to the reference low voltage value VSS. In this embodiment, the reference circuit 1211 generates the reference value VRN based on a resistance value of the reference resistor R1R, a resistance value of the reference resistor R2R, and a forward bias value VD1R of the reference diode D1R. The reference value VRN is shown in Formula (1).

$$VRN = \left[ VCC - (VCC - VD1R - VSS) \frac{RR1R}{RR1R+RR2R} \right] ... \text{Formula (1)}$$

"RR1R" is expressed as the resistance value of the reference resistor R1R. "RR2R" is expressed as the resistance value of the reference resistor R2R.

In this embodiment, the first phase voltage detection circuit 1212_U includes detection resistors R1U and R2U and a detection diode D1U. A first terminal of the detection resistor R1U receives the set voltage value VCC. A second terminal of the detection resistor R1U is used to output the detection value VUN. A first terminal of the detection resistor R2U is coupled to the second terminal of the detection resistor R1U. An anode of the detection diode D1U is coupled to a second terminal of the detection resistor R2U. A cathode of the detection diode D1U receives the first phase voltage value VU. When a voltage difference value between the set voltage value VCC minus the first phase voltage value VU is greater than a forward bias value VD1U of the detection diode D1U, the detection diode D1U is in a turning-on state. Therefore, the first phase voltage detection circuit 1212_U generates the detection value VUN based on a resistance value of the detection resistor R1U, a resistance value of the detection resistor R2U, and the forward bias value VD1U of the detection diode D1U.

For instance, when the voltage difference value between the set voltage value VCC minus the first phase voltage value VU is greater than the forward bias value VD1U of the detection diode D1U, the detection diode D1U is in a turning-on state. Therefore, the detection value VUN is as shown in Formula (2).

$$VUN = \left[ VCC - (VCC - VD1U - VU) \frac{RR1U}{RR1U+RR2U} \right] ... \text{Formula (2)}$$

"RR1U" is expressed as the resistance value of the detection resistor R1U. "RR2U" is expressed as the resistance value of the detection resistor R2U.

In this embodiment, the comparison circuit 1213 generates the first comparison result according to the detection value VUN and the reference value VR. The comparison circuit 1213 subtracts the reference value VRN from the detection value VUN to generate the difference value. For instance, the reference low voltage value VSS is 0 volts. The resistance value of the detection resistor R1U is equal to the resistance value of the reference resistor R1R. The resistance value of the detection resistor R2U is equal to the resistance value of the reference resistor R2R. The forward bias value VD1R of the reference diode D1R is equal to the forward bias value VD1U of the detection diode D1U. Therefore, the difference value is shown in Formula (3).

$$VUN - VRN = (VU - VSS)\left(\frac{RR1R}{RR2R+RR2R}\right)... \text{ Formula (3)}$$

In the charging mode, when the above difference value is less than "0", it means that the detection value VUN is less than the reference value VRN. The comparison circuit 1213 determines that the first phase voltage value VU is less than the reference low voltage value VSS (i.e., 0 volts). The comparison circuit 1213 generates the first comparison result corresponding to the negative voltage value of the first phase voltage value VU and provides the notification signal SN including the first comparison result. Therefore, in the charging mode, the transistor M2 is turned on. On the other hand, when the difference value is greater than "0", the transistor M2 is not turned on.

In this embodiment, the reference circuit 1211 further includes reference resistors R3R and R4R and a reference diode D2R. An anode of the reference diode D2R receives the battery voltage value VP. A first terminal of the reference resistor R3R is coupled to a cathode of the reference diode D2R. A second terminal of the reference resistor R3R is used to output the reference value VRP. The reference resistor R4R is coupled between the second terminal of the reference resistor R3R and the reference low voltage value VSS. The reference circuit 1211 generates the reference value VRP based on a resistance value of the reference resistor R3R, a resistance value of the reference resistor R4R, and a forward bias value VD2R of the reference diode D2R. For instance, the reference low voltage value VSS is 0 volts. The reference value VRP is shown in Formula (4).

$$VRP = \left[(VP - VD2R)\frac{RR4R}{RR3R+RR4R}\right]... \text{ Formula (4)}$$

"RR3R" is expressed as the resistance value of the reference resistor R3R. "RR4R" is expressed as the resistance value of the reference resistor R4R.

In this embodiment, the first phase voltage detection circuit 1212_U further includes detection resistors R3U and R4U and a detection diode D2U. An anode of the detection diode D2U receives the first phase voltage value VU. A first terminal of the detection resistor R3U is coupled to a cathode of the detection diode D2U. A second terminal of the detection resistor R3U is used to output the detection value VUP. The detection resistor R4R is coupled between the second terminal of the detection resistor R3U and the reference low voltage value VSS. When a voltage difference value between the first phase voltage value VU minus a voltage value at the anode of the detection diode D2U is greater than the forward bias value VD2U of the detection diode D1U, the detection diode D2U is in a turning-on state. Therefore, the first phase voltage detection circuit 1212_U generates the detection value VUP based on a resistance value of the detection resistor R3U, a resistance value of the detection resistor R4U, and the forward bias value VD2U of the detection diode D2U.

For instance, the reference low voltage value VSS is 0 volts. When a voltage difference value between the first phase voltage value VU minus the reference low voltage value VSS is greater than the forward bias value VD2U of the detection diode D1U, the detection diode D2U is in a turning-on state. Therefore, the detection value VUP is as shown in Formula (5).

$$VUP = \left[(VU - VD2U)\frac{RR4U}{RR3U+RR4U}\right]... \text{ Formula (5)}$$

"RR3U" is expressed as the resistance value of the detection resistor R3U. "RR4U" is expressed as the resistance value of the detection resistor R4U.

In this embodiment, the comparison circuit 1213 generates the second comparison result according to the detection value VUP and the reference value VRP. The comparison circuit 1213 subtracts the reference value VRP from the detection value VUP to generate the difference value. The resistance value of the detection resistor R3U is equal to the resistance value of the reference resistor R3R. The resistance value of the detection resistor R4U is equal to the resistance value of the reference resistor R4R. The forward bias value VD2R of the reference diode D2R is equal to the forward bias value VD2U of the detection diode D2U. Therefore, the difference value is shown in Formula (6).

$$VUP - VRP = (VU - VP)\left(\frac{RR4R}{RR3R+RR4R}\right)... \text{ Formula (6)}$$

In the charging mode, when the above difference value is greater than "0", it means that the detection value VUP is less than the reference value VRP. The comparison circuit 1213 determines that the first phase voltage value VU is greater than the battery voltage value VP. The comparison circuit 1213 generates the second comparison result corresponding to the first phase voltage value VU being greater than the battery voltage value VP and provides the notification signal SN including the second comparison result. Therefore, in the charging mode, the transistor M1 is turned on. On the other hand, when the difference value is less than "0", the transistor M1 is not turned on.

In this embodiment, the reference resistors R1R to R4R and the detection resistors R1U to R4U may be physical resistors or equal-calibration resistors formed by transistors.

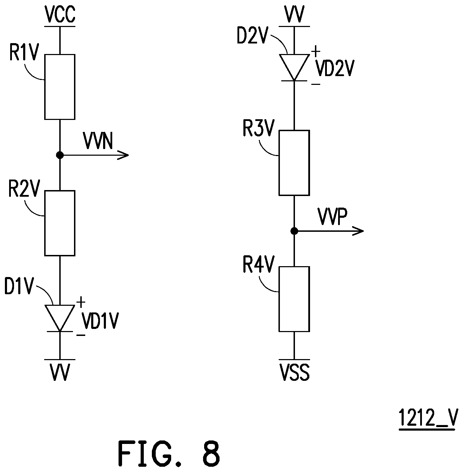

FIG. 8 is a circuit diagram illustrating a second phase voltage detection circuit according to an embodiment of the disclosure. In this embodiment, the second phase voltage detection circuit 1212_V includes detection resistors R1V and R2V and a detection diode D1V. A first terminal of the detection resistor R1V receives the set voltage value VCC. A second terminal of the detection resistor R1V is used to output the detection value VVN. A first terminal of the detection resistor R2V is coupled to the second terminal of the detection resistor R1V. An anode of the detection diode D1V is coupled to a second terminal of the detection resistor R2V. A cathode of the detection diode D1V receives the second phase voltage value VV.

The second phase voltage detection circuit 1212_V further includes detection resistors R3V and R4V and a detection diode D2V. An anode of the detection diode D2V receives the second phase voltage value VV. A first terminal of the detection resistor R3V is coupled to a cathode of the detection diode D2V. A second terminal of the detection resistor R3V is used to output the detection value VVP. The detection resistor R4V is coupled between the second terminal of the detection resistor R3V and the reference low voltage value VSS.

The operation of the second phase voltage detection circuit 1212_V is similar to the operation of the first phase voltage detection circuit 1212_U shown in FIG. 7, so description thereof is not repeated herein.

In this embodiment, the detection resistors R1V to R4V may be physical resistors or equal-calibration resistors formed by transistors.

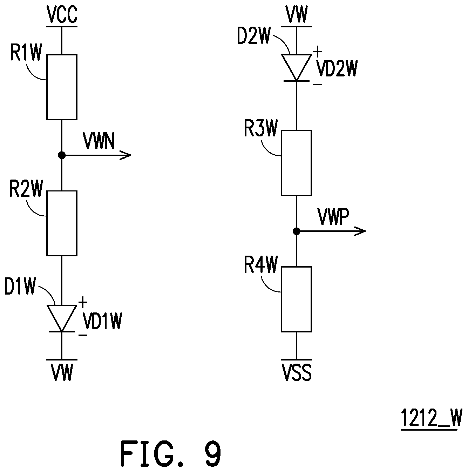

FIG. 9 is a circuit diagram illustrating a third phase voltage detection circuit according to an embodiment of the disclosure. In this embodiment, the third phase voltage detection circuit 1212_W includes detection resistors R1W and R2W and a detection diode D1W. A first terminal of the detection resistor R1W receives the set voltage value VCC. A second terminal of the detection resistor R1W is used to output the detection value VWN. A first terminal of the detection resistor R2W is coupled to the second terminal of the detection resistor R1W. An anode of the detection diode D1W is coupled to a second terminal of the detection resistor R2W. A cathode of the detection diode D1W receives the third phase voltage value VW.

The third phase voltage detection circuit 1212_W further includes detection resistors R3W and R4W and a detection diode D2W. An anode of the detection diode D2W receives the third phase voltage value VW. A first terminal of the detection resistor R3W is coupled to a cathode of the detection diode D2W. A second terminal of the detection resistor R3W is used to output the detection value VWP. The detection resistor R4W is coupled between the second terminal of the detection resistor R3W and the reference low voltage value VSS.

The operation of the third phase voltage detection circuit 1212_W is similar to the operation of the first phase voltage detection circuit 1212_U shown in FIG. 7, so description thereof is not repeated herein.

The detection resistors R1W to R4W may be physical resistors or equal-calibration resistors formed by transistors.

In view of the foregoing, the motor driving device includes the battery module and the conversion circuit. The conversion circuit includes the determination circuit, the controller, and the plurality of switch circuits. The first phase upper arm switch circuit among the plurality of switch circuits includes the power switch and the transistor. In the charging mode, when the first phase voltage value is greater than the battery voltage value, the transistor is turned on. When the transistor is turned on, the voltage difference value between the first terminal of the transistor and the second terminal of the transistor is significantly lower than the forward bias value of the diode in the power switch. In this way, the voltage drop loss of the conversion circuit may be reduced in the charging mode. The charging efficiency of the battery module may be improved.

**Claims**

1. A motor driving device (10, 100) for driving a motor (MTR), comprising:

   a battery module (11, 110) configured to store battery power (PB); and
   a conversion circuit (12, 120) coupled to the motor (MTR) and the battery module (11, 110) and configured to drive the motor (MTR) by using the battery power (PB) in a driving mode and charge the battery module (11, 110) by using motor power (PM) generated by the motor (MTR) in a charging mode,
   wherein the conversion circuit (12, 120) comprises:

      a determination circuit (121);

a controller (122) coupled to the determination circuit (121); and
a first phase upper arm switch circuit, comprising:

a first power switch (T1), wherein a first terminal of the first power switch (T1) is coupled to a positive power supply terminal (TP) of the battery module (11, 110), a second terminal of the first power switch (T1) is coupled to a first phase node (NDU), and a control terminal of the first power switch (T1) is coupled to the controller (122); and
a first transistor (M1), wherein a first terminal of the first transistor (M1) is coupled to the positive power supply terminal (TP), a second terminal of the first transistor (M1) is coupled to the first phase node (NDU), and a control terminal of the first transistor (M1) is coupled to the controller (122),

wherein in the charging mode, the controller (122) turns off the first power switch (T1) and the first transistor (M1), the determination circuit (121) determines a first phase voltage value (VU) located at the first phase node (NDU), and when the first phase voltage value (VU) is greater than a battery voltage value (VP) located at the positive power supply terminal (TP), the determination circuit (121) notifies the controller (122) to turn on the first transistor (M1).

2. The motor driving device (10, 100) according to claim 1, wherein the conversion circuit (12, 120) further comprises:
a first phase lower arm switch circuit, comprising:

a second power switch (T2), wherein a first terminal of the second power switch (T2) is coupled to the first phase node (NDU), a second terminal of the second power switch (T2) is coupled to a negative power supply terminal (TN) of the battery module (11, 110), and a control terminal of the second power switch (T2) is coupled to the controller (122); and
a second transistor (M2), wherein a first terminal of the second transistor (M2) is coupled to the first phase node (NDU), a second terminal of the second transistor (M2) is coupled to the negative power supply terminal (TN), and a control terminal of the second transistor (M2) is coupled to the controller (122).

3. The motor driving device (10, 100) according to claim 2, wherein in the charging mode,

the controller (122) turns off the second power switch (T2) and the second transistor (M2), and
when the first phase voltage value (VU) is less than a reference low voltage value (VSS), the determination circuit (121) notifies the controller (122) to turn on the second transistor (M2).

4. The motor driving device (10, 100) according to claim 3, wherein in the charging mode,

the determination circuit (121) determines a first phase current (IU) flowing through the first phase node (NDU), and
when the first phase current (IU) flows to the positive power supply terminal (TP) through a diode of the first power switch (T1), the determination circuit (121) notifies the controller (122) to turn on the first transistor (M1).

5. The motor driving device (10, 100) according to claim 4, wherein in the charging mode,
when the first phase current (IU) flows to the first phase node (NDU) through a diode (D2) of the second power switch (T2), the determination circuit (121) notifies the controller (122) to turn on the second transistor (M2).

6. The motor driving device (10, 100) according to claim 3, wherein in the charging mode,

when the first transistor (M1) is turned on, the determination circuit (121) determines a first phase current (IU) flowing through the first phase node (NDU), and
when the first phase current (IU) flows from the positive power supply terminal (TP) to the first phase node (NDU), the determination circuit (121) notifies the controller (122) to turn off the first transistor (M1).

7. The motor driving device (10, 100) according to claim 6, wherein in the charging mode,

when the second transistor (M2) is turned on, the determination circuit (121) determines the first phase current (IU), and
when the first phase current (IU) flows from the first phase node (NDU) to the negative power supply terminal (TN), the determination circuit (121) notifies the controller (122) to turn off the second transistor (M2).

8. The motor driving device (10, 100) according to claim 3, wherein in the charging mode,

when the first transistor (M1) is turned on, the determination circuit (121) determines the first phase voltage value (VU), and

when the first phase voltage value (VU) is greater than the battery voltage value (VP), the determination circuit (121) notifies the controller (122) to turn off the first transistor (M1) based on a first turning-on time length (TL1) and determines the first phase voltage value (VU) when the first transistor (M1) is turned off.

9. The motor driving device (10, 100) according to claim 3, wherein in the charging mode,

when the second transistor (M2) is turned on, the determination circuit (121) determines the first phase voltage value (VU), and

when the first phase voltage value (VU) is equal to the reference low voltage value (VSS), the determination circuit (121) notifies the controller (122) to turn off the second transistor (M2) based on a second turning-on time length (TL2) and determines the first phase voltage value (VU) when the second transistor (M2) is turned off.

10. The motor driving device (10, 100) according to claim 1, wherein the determination circuit (121) comprises:

a first phase voltage detection circuit (1212_U) coupled to the first phase node (NDU) and configured to generate a first detection value (VUN) according to the first phase voltage value (VU) and a reference low voltage value (VSS) and generate a second detection value (VLTP) according to the first phase voltage value (VU) and a set voltage value (VCC);

a reference circuit (1211) coupled to the positive power supply terminal (TP) and configured to convert the set voltage value (VCC) into a first reference value (VRN) and the battery voltage value (VP) into a second reference value (VRP); and

a comparison circuit (1213), coupled to the first phase voltage detection circuit (1212_U) and the reference circuit (1211) and configured to:

notify the controller (122) according to a first comparison result between the first detection value (VUN) and the first reference value (VRN) when the first phase voltage value (VU) is a negative voltage value, and notify the controller (122) according to a second comparison result between the second detection value (VLTP) and the second reference value (VRP) when the first phase voltage value (VU) is a positive voltage value.

11. The motor driving device (10, 100) according to claim 10, wherein the first phase voltage detection circuit (1212_U) comprises:

a first detection resistor (R1U), wherein a first terminal of the first detection resistor (R1U) receives the set voltage value (VCC), and a second terminal of the first detection resistor (R1U) is used to output the first detection value (VUN);

a second detection resistor (R2U), wherein a first terminal of the second detection resistor (R2U) is coupled to the second terminal of the first detection resistor (R1U); and

a first detection diode (D1U), wherein an anode of the first detection diode (D1U) is coupled to a second terminal of the second detection resistor (R2U), and a cathode of the first detection diode (D1U) receives the first phase voltage value (VU).

12. The motor driving device (10, 100) according to claim 11, wherein the reference circuit (1211) comprises:

a first reference resistor (R1R), wherein a first terminal of the first reference resistor (R1R) receives the set voltage value (VCC), and a second terminal of the first reference resistor (R1R) is used to output the first reference value (VRN);

a second reference resistor (R2R), wherein a first terminal of the second reference resistor (R2R) is coupled to the second terminal of the first reference resistor (R1R); and

a first reference diode (D1R), wherein an anode of the first reference diode (D1R) is coupled to a second terminal of the second reference resistor (R2R), and a cathode of the first reference diode (D1R) is coupled to the reference low voltage value (VSS).

13. The motor driving device (10, 100) according to claim 12, wherein a forward bias value (VD1R) of the first reference diode (D1R) is equal to a forward bias value (VD1U) of the first detection diode (D1U).

14. The motor driving device (10, 100) according to claim 12, wherein the first phase voltage detection circuit (1212_U) further comprises:

a second detection diode (D2U), wherein an anode of the second detection diode (D2U) receives the first phase voltage value (VU);
a third detection resistor (R3U), wherein a first terminal of the third detection resistor (R3U) is coupled to a cathode of the second detection diode (D2U), and a second terminal of the third detection resistor (R3U) is used to output the second detection value (VLTP); and
a fourth detection resistor (R4U) coupled between the second terminal of the third detection resistor (R3U) and the reference low voltage value (VSS).

15. The motor driving device (10, 100) according to claim 14, wherein the reference circuit (1211) further comprises:

a second reference diode (D2R), wherein an anode of the second reference diode (D2R) receives the battery voltage value (VP);
a third reference resistor (R3R), wherein a first terminal of the third reference resistor (R3R) is coupled to a cathode of the second reference diode (D2R), and a second terminal of the third reference resistor (R3R) is used to output the second reference value (VRP); and
a fourth reference resistor (R4R) coupled between the second terminal of the third reference resistor (R3R) and the reference low voltage value (VSS).

16. The motor driving device (10, 100) according to claim 1, wherein the battery module (11, 110) is implemented by an aluminum-ion battery.

FIG. 1 (PRIOR ART)

EP 4 489 292 A1

FIG. 2

EP 4 489 292 A1

SM1

VP

VU

TL1

tp1

tp2

tp3

tp4

tp5

FIG. 3

FIG. 4

EP 4 489 292 A1

FIG. 5

FIG. 6

1211

1212_U

FIG. 7

1212_V

# FIG. 8

EP 4 489 292 A1

1212_W

FIG. 9

**Europäisches Patentamt**
**European Patent Office**
**Office européen des brevets**

# EUROPEAN SEARCH REPORT

Application Number

EP 24 17 2896

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 404 188 B2 (AISIN AW CO [JP]) 3 September 2019 (2019-09-03) * the whole document * | 1-16 | INV. H02P9/10 H02J7/14 H02M7/5387 H02M7/797 |
| X | JP 2017 228912 A (NISSAN MOTOR; RENAULT SAS) 28 December 2017 (2017-12-28) * the whole document * | 1-16 | |
| X | US 8 885 368 B2 (KAZAMA SHUN [JP]; TAGOME MASAKI [JP] ET AL.) 11 November 2014 (2014-11-11) * the whole document * | 1-16 | |
| A | JP H04 354156 A (FUJI ELECTRIC CO LTD) 8 December 1992 (1992-12-08) * the whole document * | 1-16 | |
| X | CN 101 154 880 B (MITSUBISHI ELECTRIC CORP) 8 August 2012 (2012-08-08) | 1 | |
| A | * the whole document * | 2-16 | TECHNICAL FIELDS SEARCHED (IPC) |
| A | US 2013/133358 A1 (ITO NORIKAZU [JP]) 30 May 2013 (2013-05-30) * the whole document * | 1-16 | H02P H02J H02M |

The present search report has been drawn up for all claims

| Place of search | Date of completion of the search | Examiner |
|---|---|---|
| Munich | 1 October 2024 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 2896

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2024

| Patent document cited in search report | | Publication date | Patent family member(s) | | Publication date |
|---|---|---|---|---|---|
| US 10404188 | B2 | 03-09-2019 | CN | 108370223 A | 03-08-2018 |
| | | | DE | 112016003958 T5 | 30-05-2018 |
| | | | JP | 6468363 B2 | 13-02-2019 |
| | | | JP | WO2017086201 A1 | 14-06-2018 |
| | | | US | 2018287510 A1 | 04-10-2018 |
| | | | WO | 2017086201 A1 | 26-05-2017 |
| JP 2017228912 | A | 28-12-2017 | JP | 6739865 B2 | 12-08-2020 |
| | | | JP | 2017228912 A | 28-12-2017 |
| US 8885368 | B2 | 11-11-2014 | CN | 103222175 A | 24-07-2013 |
| | | | EP | 2590311 A1 | 08-05-2013 |
| | | | JP | 5108995 B2 | 26-12-2012 |
| | | | JP | WO2012042706 A1 | 03-02-2014 |
| | | | US | 2013039100 A1 | 14-02-2013 |
| | | | WO | 2012042706 A1 | 05-04-2012 |
| JP H04354156 | A | 08-12-1992 | NONE | | |
| CN 101154880 | B | 08-08-2012 | CN | 101154880 A | 02-04-2008 |
| | | | DE | 102007019524 A1 | 10-04-2008 |
| | | | JP | 4675302 B2 | 20-04-2011 |
| | | | JP | 2008079475 A | 03-04-2008 |
| | | | US | 2008074816 A1 | 27-03-2008 |
| US 2013133358 | A1 | 30-05-2013 | AU | 2012254876 A1 | 13-06-2013 |
| | | | CN | 103138596 A | 05-06-2013 |
| | | | EP | 2597767 A2 | 29-05-2013 |
| | | | ES | 2689796 T3 | 15-11-2018 |
| | | | JP | 5591213 B2 | 17-09-2014 |
| | | | JP | 2013115855 A | 10-06-2013 |
| | | | US | 2013133358 A1 | 30-05-2013 |

EPO FORM P0459

For more details about this annex : see Official Journal of the European Patent Office, No. 12/82